# EUROPEAN PATENT SPECIFICATION

(11) **EP 3 852 249 B1**
(45) Date of publication and mention of the grant of the patent: **02.07.2025**
(21) Application number: 19860332.6
(22) Date of filing: 10.07.2019
(51) Int. Cl.: H02K 5/22, H02K 5/08, H02K 5/15, H02K 5/173

(54) **MOLDED MOTOR**
GEFORMTER MOTOR
MOTEUR MOULÉ

(30) Priority: 12.09.2018 JP 2018170912
(43) Date of publication of application: 21.07.2021
(73) Proprietor: Panasonic Intellectual Property Management Co., Ltd., Osaka-shi, Osaka 540-6207 (JP)
(72) Inventor: AMAYA, Takanori, Osaka-shi, Osaka 540-6207 (JP); NANBU, Yasuo, Osaka-shi, Osaka 540-6207 (JP)
(74) Representative: SSM Sandmair
(86) International application number: PCT/JP2019/027258
(87) International publication number: WO 2020/054199

(56) References cited:
- EP-A1- 3 386 076
- GB-A- 801 224
- JP-A- 2000 120 512
- JP-A- 2000 120 512
- JP-A- 2003 032 934
- JP-A- 2003 032 934
- JP-A- 2014 039 421
- JP-A- 2015 133 861
- JP-A- H11 196 547
- JP-A- H11 206 059
- JP-B2- 6 202 173
- JP-U- S 534 201

## Description

### TECHNICAL FIELD

The present disclosure relates to a molded motor.

### BACKGROUND ART

Conventionally, a molded motor in which a stator is covered with a mold resin is known (Patent Literature 1 (PTL 1)). For example, a molded motor includes a stator, a rotor disposed inside the stator, a mold resin that covers the stator, and a printed circuit board to which coils included in the stator are connected. In a molded motor, a plurality of lead wires connected to a printed circuit board are drawn out of the motor via a lead bush attached to an opening of a side wall portion made of a mold resin. Another example of such a motor is disclosed in JP 6 202173 B2.

In recent years, as the output of molded motors has increased, the heat generated by the coils wound around the stator core has increased. Thus, there is a problem that the mold resin covering the coils is thermally deteriorated.

Therefore, in order to suppress heat deterioration of the mold resin, it has been proposed to use an epoxy resin in which fillers having a high thermal conductivity are contained as a mold resin (Patent Literature 2 (PTL 2)). Citation List

### Patent Literature

PTL 1: International Patent Publication No. 2012/101976
PTL 2: Japanese Unexamined Patent Application Publication No. 2004-143368

### SUMMARY OF THE INVENTION

### TECHNICAL PROBLEMS

However, when a coil abnormally heats up by an excessive amount of current flowing in the coil included in the stator or the like, there is a possibility that a layer short circuit may occur in which the insulating material that insulates and coats the surface of the conductive wire forming the coil is melted and the conductive wires forming the coil are short-circuited. In addition, sparks may occur when a layer short circuit occurs.

In this case, if the coil is disconnected, no current will flow through the coil, so that abnormal heat generation of the coil can be avoided. However, in a high-output molded motor, the wire diameter of the coil included in the stator is large (for example, φ0.3 mm or more), so that the coil is less likely to be disconnected even if the coil abnormally heats up. For this reason, there is a high possibility that a layer short circuit will occur in a high-output molded motor.

On the other hand, when the temperature of the interior of the motor is increased due to heat generation of the coil or the like, flammable gas is generated from the resin components such as an insulator interposed between the lead bush or the stator core and the coil.

In this way, if a layer short circuit occurs and sparks are generated when flammable gas is present inside the motor, the sparks may ignite the gas.

Particularly, when the flammable gas is generated in the vicinity of the lead bush, the spark is likely to occur between the lead wires which are inserted through the lead bush due to the air (oxygen) flowing in the vicinity of the lead bush, and the possibility to ignite increases.

At this time, if the lead bush is made of resin, the lead bush will melt due to ignition. For example, a lead bush made of polybutylene terephthalate (hereinafter referred to as "PBT") starts to melt at about 230 °C. When the lead bush is melted in this way, there is a possibility that the ignited fire will spout from the melted portion of the lead bush (that is, the opening of the side wall portion formed by the mold resin) to the outside of the motor to spread the fire.

In addition, when the temperature inside the motor continues to be high, the combustible gas is filled inside the motor and the concentration (pressure) of the gas increases, so that the possibility for an ignited fire to spout to the outside increases. At this time, a fire is likely to spout to the outside from the lead bush, which is weaker in strength than the mold resin.

The present disclosure has been made in order to solve such a problem, and an object of the present disclosure is to provide a molded motor that can suppress fire from spouting from the place where the lead bush in the mold resin is attached even when ignition occurs inside the mold resin due to abnormal heat generation or the like of the coil included in the stator.

### SOLUTIONS TO PROBLEM

To achieve the above object, one aspect of the molded motor according to the present disclosure includes: a stator that includes a stator core and a coil wound around the stator core via an insulator; a rotor that is arranged to face the stator and includes a rotor core and a rotary shaft; a mold resin that includes a first opening and covers the stator; and a lead bush that is attached to the first opening and includes an insertion through-hole for drawing out an electric wire, wherein the lead bush includes a metal member including a second opening for drawing out the electric wire, the second opening being smaller than the first opening and larger than the insertion through-hole.

In addition, another aspect of the molded motor according to the present disclosure includes: a stator that includes a stator core and a coil wound around the stator core via an insulator; a rotor that is arranged to face the stator and includes a rotor core and a rotary shaft; a mold resin that includes a first opening and covers the stator; and a lead bush made of a ceramic that is attached to the first opening and has an insertion through-hole for drawing out an electric wire, wherein the insertion through-hole is smaller than the first opening.

### ADVANTAGEOUS EFFECT OF INVENTION

According to the present disclosure, even when the fire occurs inside the mold resin, it is possible to suppress fire from spouting to the outside from the portion where the lead bush in the mold resin is attached.

### BRIEF DESCRIPTION OF DRAWINGS

FIG. 1 is a perspective view of a molded motor according to Embodiment 1.
FIG. 2 is an exploded perspective view of the molded motor according to Embodiment 1.
FIG. 3 is a cross-sectional view of the molded motor according to Embodiment 1.
FIG. 4 is a cross-sectional view of the molded motor according to Embodiment 1 taken along line IV-IV in FIG. 3.
FIG. 5 is a diagram showing the molded motor according to Embodiment 1 with a lead bush removed.
FIG. 6 is a diagram showing a state in which the lead bush is attached to the mold resin in the molded motor according to Embodiment 1.
FIG. 7 illustrates a front view of a lead bush used in the molded motor according to Embodiment 1 in (a), a side view of the lead bush in (b), and a top view of the lead bush in (c).
FIG. 8 is a cross-sectional view showing a peripheral structure of the mold resin and the lead bush in the molded motor according to Embodiment 1.
FIG. 9 is a diagram showing a configuration of a lead bush of a first variation used in the molded motor according to Embodiment 1.
FIG. 10 is a diagram showing a configuration of a lead bush of a second variation used in the molded motor according to Embodiment 1.
FIG. 11 is a diagram showing a configuration of a metal member in the lead bush of the second variation used in the molded motor according to Embodiment 1.
FIG. 12 illustrates a front view of a lead bush used in the molded motor according to Embodiment 2 in (a), a side view of the lead bush in (b), and a top view of the lead bush in (c).
FIG. 13 is a cross-sectional view showing a peripheral structure of a mold resin and a lead bush in the molded motor according to Embodiment 2.
FIG. 14A is a diagram showing a configuration of a lead bush in a variation used in the molded motor according to Embodiment 2.
FIG. 14B is a diagram showing a configuration of a metal member in a lead bush in a variation used in the molded motor according to Embodiment 2.
FIG. 15 is a cross-sectional view showing a peripheral structure of a mold resin and a lead bush in the molded motor according to Embodiment 3.
FIG. 16 is a perspective view of a metal member included in the lead bush used in the molded motor according to Embodiment 3.
FIG. 17 is a top view of a metal member included in a lead bush used in the molded motor according to Embodiment 3.
FIG. 18 is a cross-sectional view of the molded motor according to Embodiment 4.
FIG. 19 is a diagram showing a molded motor according to Embodiment 4 with a lead bush removed.
FIG. 20 is a cross-sectional view showing a peripheral structure of a mold resin and a lead bush in the molded motor according to Embodiment 4.
FIG. 21 is a cross-sectional view showing a peripheral structure of a mold resin and another lead bush in the molded motor according to Embodiment 4.

### DESCRIPTION OF EXEMPLARY EMBODIMENTS

Hereinafter, embodiments of the present disclosure will be described. It should be noted that each of the embodiments described below shows a specific example of the present disclosure. Therefore, the numerical values, the components, the arrangement positions and connection forms of the components, the steps, the order of the steps, and the like shown in the following embodiments are examples, and are not intended to limit the present disclosure. Therefore, among the components in the following embodiments, the components that are not described in the independent claims showing the highest concept of the present disclosure will be described as arbitrary components.

In addition, each drawing is a schematic view and is not necessarily strictly illustrated. It should be noted that in each drawing, the same reference numerals are given to substantially the same configurations, and overlapping description will be omitted or simplified.

### EMBODIMENT 1

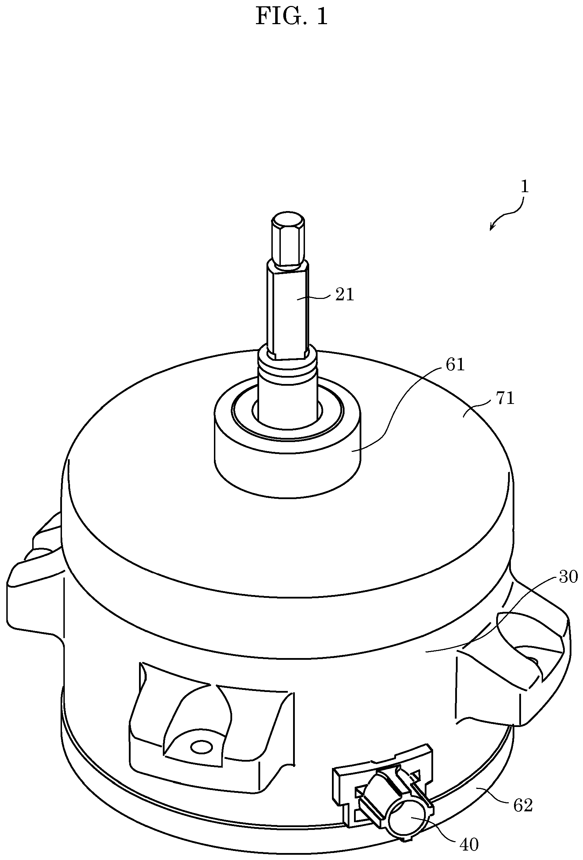

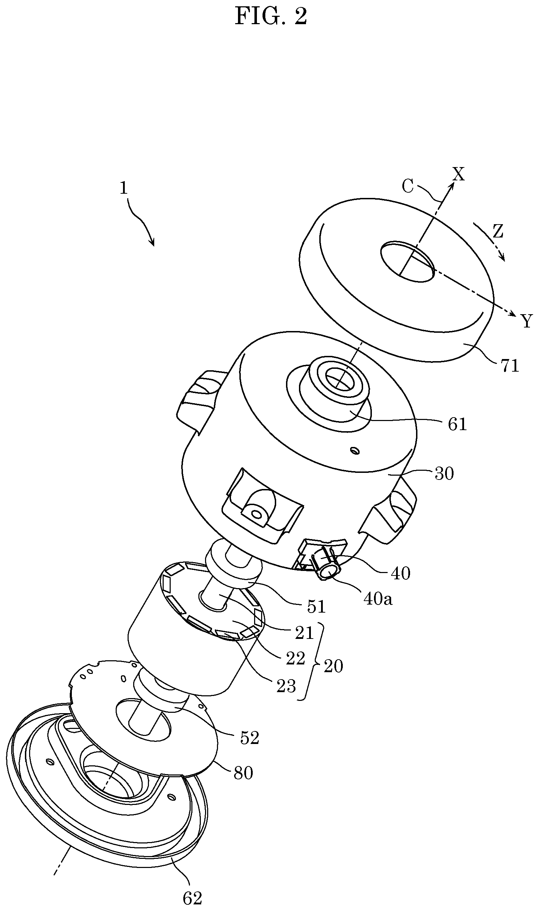

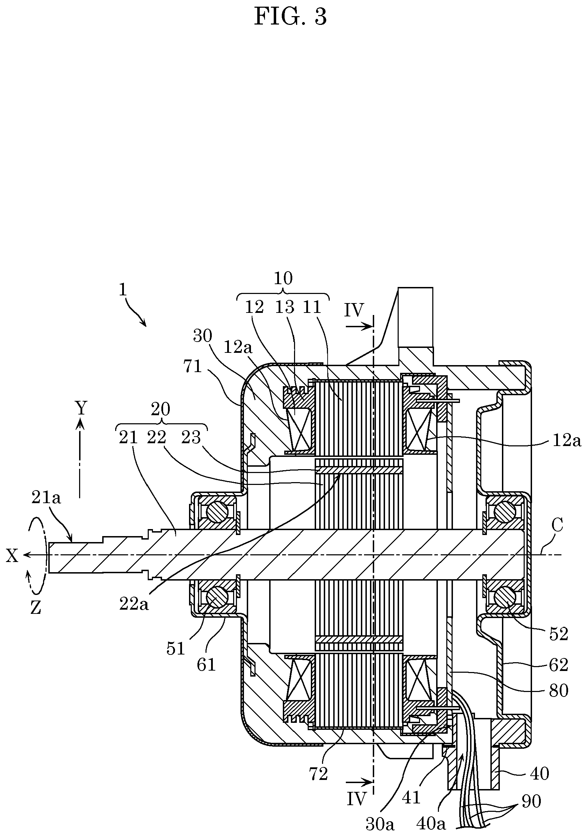

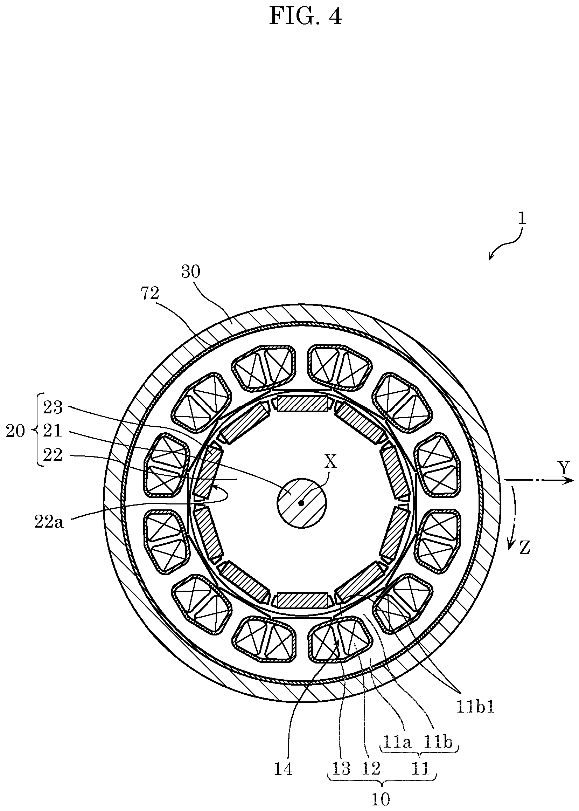

First, the overall structure of molded motor 1 according to Embodiment 1 will be described with reference to FIGS. 1 to 4. FIG. 1 is a perspective view of molded motor 1 according to Embodiment 1. FIG. 2 is an exploded perspective view of molded motor 1. FIG. 3 is a cross-sectional view of molded motor 1. FIG. 4 is a cross-sectional view of molded motor 1 taken along line IV-IV in FIG. 34. It should be noted that in FIGS. 2 to 4, a direction in which rotary shaft 21 included in rotor 20 extends is defined as axial direction X, a direction that extends from shaft center C about shaft center C of rotary shaft 21 is defined as radial direction Y, and a circumferential direction centered on shaft center C is defined as circumferential direction Z. In addition, in FIG. 4, hatching is omitted for convenience of illustration of the core portion of stator core 11 and the core portion of rotor core 22 in order to make the drawing easy to see.

As shown in FIGS. 1 to 3, molded motor 1 includes stator 10, rotor 20 arranged to face stator 10, mold resin 30 covering stator 10, and lead bush 40 attached to mold resin 30.

Molded motor 1 further includes first bearing 51 and second bearing 52, first bracket 61 and second bracket 62, first metal cover 71 and second metal cover 72, and circuit board 80.

In molded motor 1, mold resin 30, first bracket 61, second bracket 62, and first metal cover 71 configure the outer shell of molded motor 1.

Molded motor 1 in the present embodiment is a brushless motor without using a brush. In addition, molded motor 1 in the present embodiment is an inner rotor type motor in which rotor 20 is arranged inside stator 10. It should be noted that the present disclosure can also be applied to an outer rotor type motor in which the rotor is arranged outside the stator.

Stator 10 (stational element) is arranged so as to surround rotor 20 via a small air gap between stator 10 and rotor 20. Stator 10 includes stator core 11, coil 12, and insulator 13.

Stator core 11 is an annular iron core that generates a magnetic force for rotating rotor 20. As shown in FIG. 3, stator core 11 is, for example, a stacked body in which a plurality of electromagnetic steel plates are stacked in the longitudinal direction (axial direction X) of rotary shaft 21 included in rotor 20. It should be noted that stator core 11 is not limited to the stacked body and may be a bulk body made of a magnetic material.

As shown in FIG. 4, stator core 11 includes yoke 11a formed in an annular shape so as to surround rotor 20, and a plurality of teeth 11b protruding from yoke 11a toward rotary shaft 21 in a convex shape. In the present embodiment, stator core 11 is provided with twelve teeth 11b.

Yoke 11a is a back yoke formed outside each tooth 11b. In the present embodiment, yoke 11a is formed in an annular shape about shaft center C.

The plurality of teeth 11b are arranged at equal intervals in circumferential direction Z, respectively, while forming slots 14 which are openings between them. In addition, extending portions 11b1 extending on both sides in circumferential direction Z are formed at the extending tip portions where each tooth 11b is extended. The inner peripheral surface located at the tip portion of tooth 11b including this extending portion 11b1 serves as a magnetic pole surface facing the outer peripheral surface of rotor 20. It should be noted that in two adjacent teeth 11b, a gap (slot opening) exists between extending portion 11b1 of one tooth 11b and extending portion 11b1 of the other tooth 11b.

Coil 12 is a winding coil wound around stator core 11 via insulator 13. Specifically, as shown in FIG. 4, coil 12 is wound around each of the plurality of teeth 11b included in stator core 11. In addition, as shown in FIG. 3, each coil 12 includes coil end 12a protruding from stator core 11 to both sides of stator core 11 along the longitudinal direction (axial direction X) of rotary shaft 21. That is, coil end 12a is a portion of coil 12 that protrudes and sticks out from stator core 11 in axial direction X. It should be noted that 12 coils 12 are used in the present embodiment. Therefore, the number of slots of molded motor 1 is 12.

In addition, molded motor 1 is a high output motor having an output of 750 W or more in the present embodiment. For this reason, coil 12 having a wire diameter φ of 0.3 mm or more is used. As an example, wire diameter φ of coil 12 is 0.5 mm to 1.0 mm.

The plurality of coils 12 are configured by each unit coil of three phases of U phase, V phase, and W phase whose phases are electrically different from each other by 120 degrees. That is, each coil 12 wound around tooth 11b is energized and driven by three-phase alternating current that is energized in units of U-phase, V-phase, and W-phase, respectively. It should be noted that coils 12 of each phase are connected by a crossover wire (not shown). The crossover wire is arranged on the outer peripheral wall portion of insulator 13 or the like. Coil 12 and the crossover wire are configured by a conductor wire serving as a core wire and an insulator for insulating and coating the surface of the conductor wire.

In addition, ends of each phase of coil 12 are connected by winding connection portions included in circuit board 80. Specifically, pattern wirings for electrically connecting the plurality of coils 12 for each of the U-phase, V-phase, and W-phase are formed on circuit board 80, and the ends of coils 12 for each phase are electrically connected with pattern wirings of circuit board 80 by solder or the like. It should be noted that circuit board 80 includes an opening through which rotary shaft 21 is loosely inserted at a center portion, and has, for example, an annular shape (a donut shape), a fan shape (an arc shape), a C shape, or the like.

Alternatively, the terminal of each phase of coil 12 may be configured to use a connecting member made of a conductive material in addition to the configuration using the circuit board. It should be noted that the present disclosure can be applied to any structure as long as the lead wire is inserted inside the enclosure of the motor regardless of the specifications of the motor.

As shown in FIGS. 3 and 4, insulator 13 is an insulating frame that covers stator core 11. Specifically, insulator 13 covers teeth 11b included in stator core 11, and is provided for each tooth 11b. Insulator 13 is made of, for example, an insulating resin material such as PBT.

Rotor 20 (rotational element) arranged inside stator 10 rotates due to the magnetic force generated in stator 10. Specifically, rotor 20 includes rotary shaft 21, and rotates about shaft center C of rotary shaft 21 as a rotation center. Rotary shaft 21 extends along axial direction X.

Rotor 20 has a configuration in which a plurality of N poles and S poles are repeatedly present in circumferential direction Z. In the present embodiment, rotor 20 is a permanent magnet embedded rotor (IPM rotor), and includes rotor core (rotational element iron core) 22 and permanent magnet 23 that is inserted into each of a plurality of magnet insertion holes 22 formed in rotor core 22.

As shown in FIG. 3, rotor core 22 is a substantially columnar stacked body in which a plurality of electromagnetic steel plates are stacked in the longitudinal direction (axial direction X) of rotary shaft 21. In addition, rotor core 22 is formed with a plurality of magnet insertion holes 22a penetrating in axial direction X at equal intervals in circumferential direction Z as shown in FIG. 4. One permanent magnet 23 is inserted into each magnet insertion hole 22a. In the present embodiment, the number of magnetic poles is 10, and ten permanent magnets 23 are arranged so that the S-pole and N-pole are alternately located in circumferential direction Z.

Rotary shaft 21 is fixed to the center of rotor core 22. Rotary shaft 21 is a shaft such as a metal rod, and penetrates rotor core 22 so as to extend on both sides of rotor core 22. Rotary shaft 21 is fixed to rotor core 22 by, for example, being press-fitted or shrink-fitted into a center hole of rotor core 22.

As shown in FIG. 3, rotary shaft 21 is held by first bearing 51 and second bearing 52. With this, rotor 20 is rotatable with respect to stator 10. As an example, first bearing 51 and second bearing 52 are bearings that rotatably support rotary shaft 21. First bearing 51 is fixed to first bracket 61 made of a metal. In addition, second bearing 52 is fixed to second bracket 62 made of a metal. It should be noted that rotary shaft 21 penetrates first bearing 51, and although not shown, a load such as a rotary fan is attached to a portion of rotary shaft 21 that protrudes from first bearing 51 to the outside. A portion of rotary shaft 21 to which a load such as a rotary fan is attached is also referred to as output shaft 21a.

Rotor 20 configured in this way is rotated by the magnetic flux generated in stator 10. Specifically, when electric power is supplied from circuit board 80 to coil 12 included in stator 10, a field current flows through coil 12 and a magnetic flux is generated in stator core 11. The magnetic force generated by the interaction between the magnetic flux generated by this stator core 11 and the magnetic flux generated by permanent magnet 23 included in rotor 20 serves as a torque for rotating rotor 20, and rotor 20 rotates.

As shown in FIG. 3, stator 10 is covered with mold resin 30. Specifically, mold resin 30 covers stator core 11, coil 12, and insulator 13 except for the inner peripheral surface of teeth 11b included in stator core 11. Mold resin 30 is made of a resin material such as unsaturated polyester (BMC).

In the present embodiment, mold resin 30 configures an enclosure which is a part of the outer shell of molded motor 1. That is, mold resin 30 that covers stator 10 configures a housing that encloses rotor 20. Specifically, mold resin 30 is a body portion of molded motor 1 and is formed in a substantially cylindrical shape.

It should be noted that first bracket 61 is provided on one edge portion of mold resin 30 so as to close one opening of mold resin 30. In addition, second bracket 62 is provided on the other edge portion of mold resin 30 so as to close the other opening of mold resin 30. First bracket 61 and second bracket 62 are made of, for example, iron, but are not limited thereto. In addition, the overall diameter of first bracket 61 is smaller than the overall diameter of second bracket 62 in the present embodiment, but the present invention is not limited thereto.

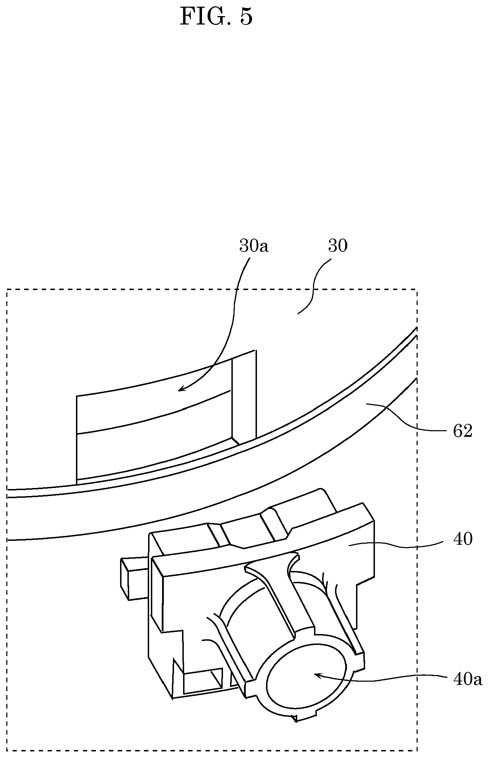

As shown in FIGS. 1 to 3, lead bush 40 is attached to mold resin 30. Here, detailed configurations of mold resin 30 and lead bush 40 will be described using FIGS. 5 to 8 with reference to FIGS. 1 to 4.

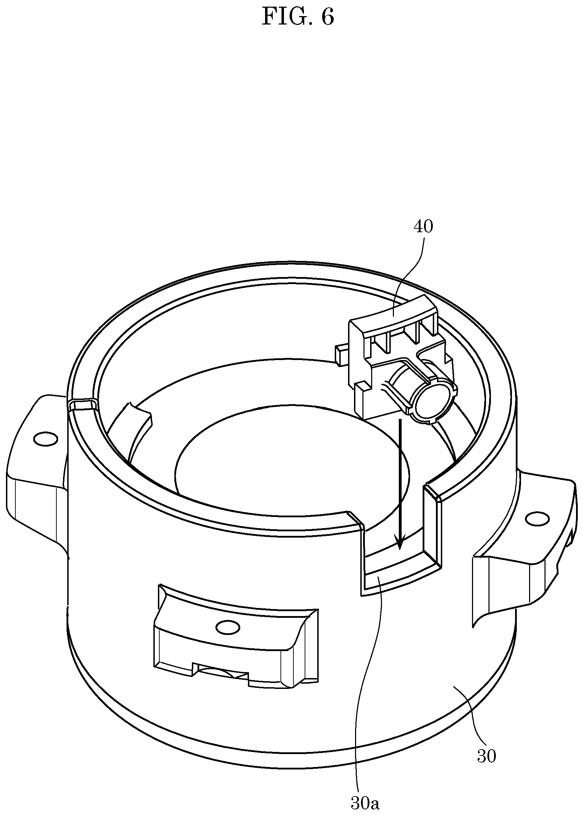

FIG. 5 is a diagram showing molded motor 1 according to Embodiment 1 with lead bush 40 removed. FIG. 6 is a diagram showing a state in which lead bush 40 is attached to mold resin 30. It should be noted that the vertical direction (axial direction X) of molded motor 1 in FIG. 6 is shown in reverse to FIGS. 1 and 5 in order to make it easier to understand how lead bush 40 is attached to mold resin 30.

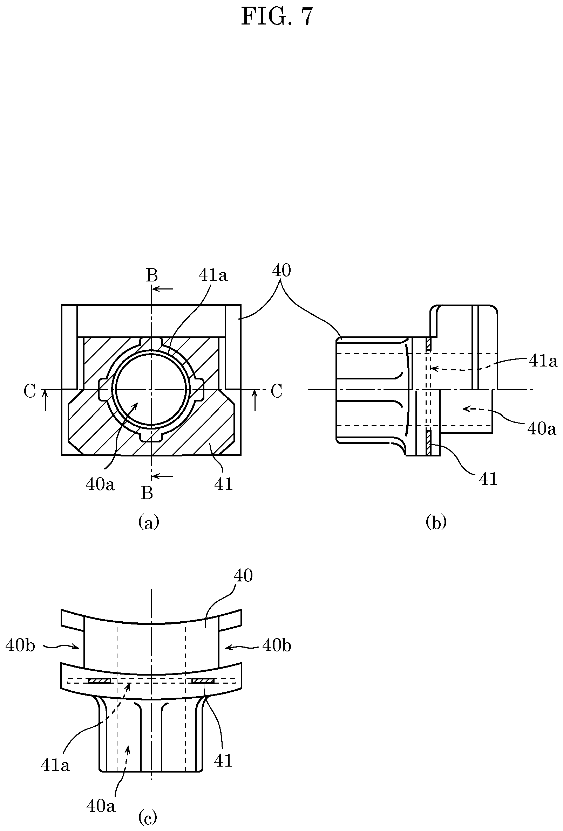

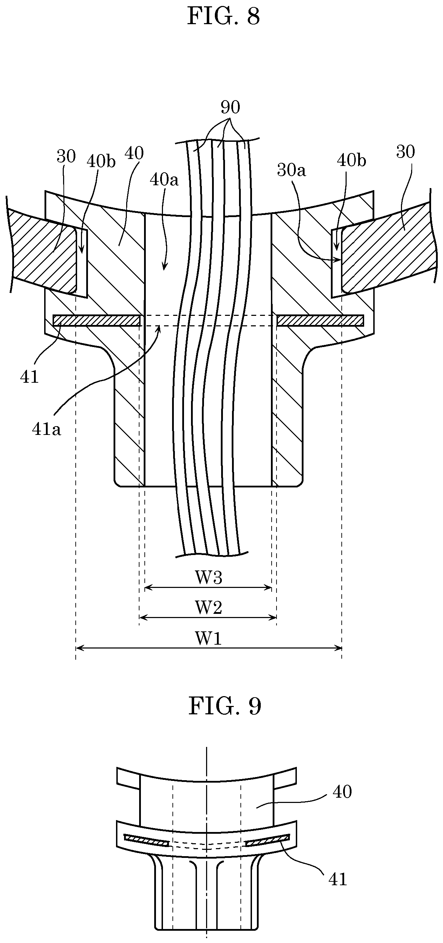

FIG. 7 is a diagram showing the configuration of lead bush 40 used in molded motor 1, wherein (a) is a front view, (b) is a side view, and (c) is a top view. It should be noted that metal member 41 is hatched for convenience in FIG. 7. In addition, (b) in FIG. 7 shows a cross-section of metal member 41 taken along line B-B of (a) in FIG. 7, and (c) in FIG. 7 shows a cross-section of metal member 41 taken along line C-C of (b) in FIG. 7. In addition, FIG. 8 is a cross-sectional view showing a peripheral structure of mold resin 30 and lead bush 40 in molded motor 1.

As shown in FIGS. 5 and 6, mold resin 30 includes first opening 30a. Lead bush 40 is attached to this first opening 30a. As shown in FIG. 6, first opening 30a is formed so as to cut out a part of the outer wall portion of mold resin 30. Specifically, first opening 30a is formed so as to cut out a part of the opening end portion of mold resin 30 along shaft center C. As an example, the shape of first opening 30a is a rectangular shape in a side view of mold resin 30. Lead bush 40 is attached to mold resin 30 by inserting it into this first opening 30a along shaft center C. Specifically, lead bush 40 is provided with recess 40b for accommodating the side wall portion of mold resin 30 as shown in FIGS. 7 and 8, and lead bush 40 can be fixed to mold resin 30 by fitting this recess 40b into the side wall potion of mold resin 30 in first opening 30a as shown in FIG. 8.

As shown in FIG. 3, lead bush 40 is a lead portion for drawing out electric wire 90 connected to circuit board 80. In addition, lead bush 40 is a protective member that protects electric wire 90 inserted through lead bush 40. Lead bush 40 is also called a cable bushing or a bushing. Electric power for energizing coil 12 wound around stator 10 is supplied to electric wire 90. That is, electric power is supplied to circuit board 80 via
electric wire 90. Electric wire 90 is a power supply line and is, for example, a lead wire. In the present embodiment, electric wire 90 is configured by three lead wires. Each lead wire is configured by a conductor wire serving as a core wire and an insulator for insulating and coating the surface of the conductor wire.

It should be noted that the power for energizing coil 12 directly or indirectly is supplied to wire 90, as described above. In addition, a signal for controlling the motor may be supplied to electric wire 90 from a control device outside the motor.

As shown in FIGS. 3 and 8, lead bush 40 is formed with an insertion through-hole 40a for drawing out electric wire 90. That is, electric wire 90 is inserted through insertion through-hole 40a. Insertion through-hole 40a is, for example, a cylindrical through hole. In this case, the shape (opening shape) of insertion through-hole 40a is circular.

The main body of lead bush 40 (lead bush main body) is made of a non-metallic material such as a resin material or a ceramic. When the main body of lead bush 40 is made of a resin material, lead bush 40 is made of, for example, a hard insulating resin material or an insulating resin material having rubber elasticity such as an elastomer. In the present embodiment, the main body of lead bush 40 is made of PBT.

As shown in FIGS. 7 and 8, lead bush 40 includes metal member 41. Metal member 41 is attached to lead bush 40. In the present embodiment, metal member 41 is embedded in lead bush 40. Lead bush 40 in which metal member 41 is embedded can be manufactured by, for example, integral molding such as insert molding.

Metal member 41 is formed by a metal plate. Specifically, metal member 41 is a tabular flat metal plate. As an example, the metal material forming metal member 41 is iron, aluminum, copper or stainless steel.

Second opening 41a is formed in metal member 41. Second opening 41a is a through hole for drawing out electric wire 90. Electric wire 90 is inserted into second opening 41a. As an example, the shape of second opening 41a is circular in a side view of mold resin 30.

Second opening 41a is smaller than first opening 30a formed in mold resin 30, and larger than insertion through-hole 40a formed in lead bush 40. That is, when insertion through-hole 40a formed in lead bush 40 is viewed from the front (that is, in the side view of mold resin 30), the opening area of second opening 41a formed in metal member 41 is smaller than the opening area of first opening 30a formed in mold resin 30, and larger than the opening area of insertion through-hole 40a formed in lead bush 40.

More specifically, when insertion through-hole 40a formed in lead bush 40 is viewed from the front, the entire circumference of the opening edge of second opening 41a formed in metal member 41 is located inside the entire circumference of the opening edge of first opening 30a formed in mold resin 30, and is located outside the entire circumference of the opening edge of insertion through-hole 40a formed in lead bush 40. As an example, as shown in FIG. 8, when the opening width of first opening 30a is W1, the opening width of second opening 41a is W2, and the opening width of insertion through-hole 40a is W3, the relationship of W3 < W2 < W1 is satisfied.

By using lead bush 40 including metal member 41 having such a configuration, even if coil 12 wound around stator 10 abnormally generates heat or the like and a layer short circuit occurs to cause ignition inside mold resin 30 and the resin portion of lead bush 40 melts out, metal member 41 which is a non-combustible material will remain without burning. With this, since metal member 41 blocks fire from first opening 30a formed in mold resin 30 to which lead bush 40 is attached to the outside of mold resin 30, it is possible to prevent fire from spouting from molded motor 1. As a result, it is possible to suppress the spread of the fire generated in molded motor 1.

In addition, metal member 41 covers first opening 30a formed in mold resin 30 in the present embodiment. Specifically, metal member 41 is arranged so that the outer shape of metal member 41 covers first opening 30a formed in mold resin 30 in the direction intersecting with the longitudinal direction (axial direction X) of rotary shaft 21. It should be noted that the direction intersecting with the longitudinal direction of rotary shaft 21 means a radial direction centered on shaft center C of rotary shaft 21 in a plane orthogonal to the longitudinal direction of rotary shaft 21.

In this way, it is possible to close first opening 30a with metal member 41 by covering first opening 30a formed in mold resin 30 except for a portion corresponding to the opening area of second opening 41a. With this, even if ignition occurs inside mold resin 30 due to a layer short circuit or the like, it is possible to further suppress fire from spouting from first opening 30a.

In addition, mold resin 30 is provided with first metal cover 71 and second metal cover 72 as shown in FIG. 3. Each of first metal cover 71 and second metal cover 72 includes a portion provided in circumferential direction Z of mold resin 30 so as to cover coil end 12a positioned at the end portion of coil 12 wound around stator 10.

First metal cover 71 is an outer cover made of a metal, and is mounted on the first bracket 61 side of mold resin 30 (the output shaft 21a side). First metal cover 71 surrounds coil end 12a and insulator 13 positioned on the output shaft 21a side. In addition, first metal cover 71 has a hollow cup shape having an opening at the center. A part of first bracket 61 positioned on the output shaft 21a side is configured to penetrate the opening included in this first metal cover 71.

Second metal cover 72 is an inner cover made of a metal, and is configured to surround the outer periphery of stator 10. Specifically, second metal cover 72 surrounds coil end 12a and insulator 13, which are positioned on the side opposite to the output shaft 21a side, and stator core 11. In the present embodiment, second metal cover 72 is a cylindrical body that has a cylindrical shape and is open on both sides.

In this way, by covering each of coil end 12a with first metal cover 71 and second metal cover 72, even when the ignition occurs inside the molding resin 30 due to a layer short circuit or the like, fire is blocked by first metal cover 71 and second metal cover 72. With this, it is possible to further suppress fire from spouting from molded motor 1.

It should be noted that either first metal cover 71 or second metal cover 72 may be provided, but by providing both first metal cover 71 and second metal cover 72, it is possible to reliably prevent fire from spouting to the outside of molded motor 1.

As described above, according to molded motor 1 of the present embodiment, even if ignition occurs inside mold resin 30 due to abnormal heat generation of the coil or the like, it is possible to suppress fire from spouting from the place where lead bush 40 is attached in mold resin 30 to the outside.

It should be noted that metal member 41 is fixed to lead bush 40 so as to be positioned outside mold resin 30 in the present embodiment, but it is not limited thereto. For example, metal member 41 may be fixed to lead bush 40 so as to be positioned inside mold resin 30, or may be fixed to lead bush 40 so as to be positioned at first opening 30a (middle side) formed in mold resin 30.

In addition, metal member 41 is a flat metal plate in the present embodiment, but it is not limited thereto. For example, metal member 41 may be a curved metal plate like lead bush 40 shown in FIG. 9. In this case, the metal plate may be curved along the shape of the side wall portion formed by mold resin 30.

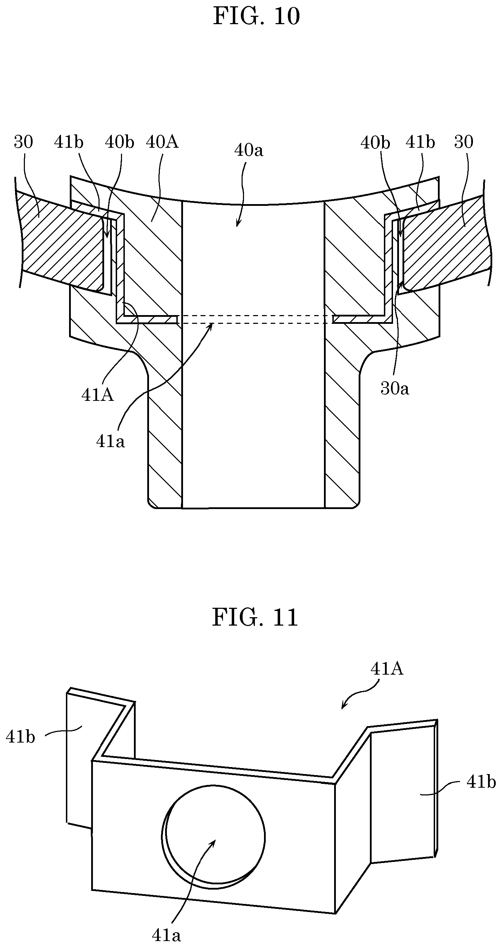

In addition, metal member 41A may include a positioning portion 41b for attaching metal member 41A to mold resin 30 like lead bush 40A shown in FIG. 10. In the present embodiment, metal member 41A includes a hook portion that can be hooked on a part of mold resin 30 as positioning portion 41b. Specifically, as shown in FIG. 11, metal member 41A includes, as a positioning portion 41b (hook portion), a bent portion formed by bending both end portions of a rectangular metal plate in a brim shape. This positioning portion 41b (bent portion) is locked to the inner surface of the side wall portion formed by mold resin 30 as shown in FIG. 10.

In this way, even if the resin portion of lead bush 40A is melted, it is possible to suppress metal member 41A from coming off from first opening 30a formed in mold resin 30 by providing positioning portion 41b to metal member 41A. That is, positioning portion 41b included in metal member 41A functions as a fall prevention structure for metal member 41A. With this, it is possible to further suppress fire from spouting from first opening 30a.

### EMBODIMENT 2

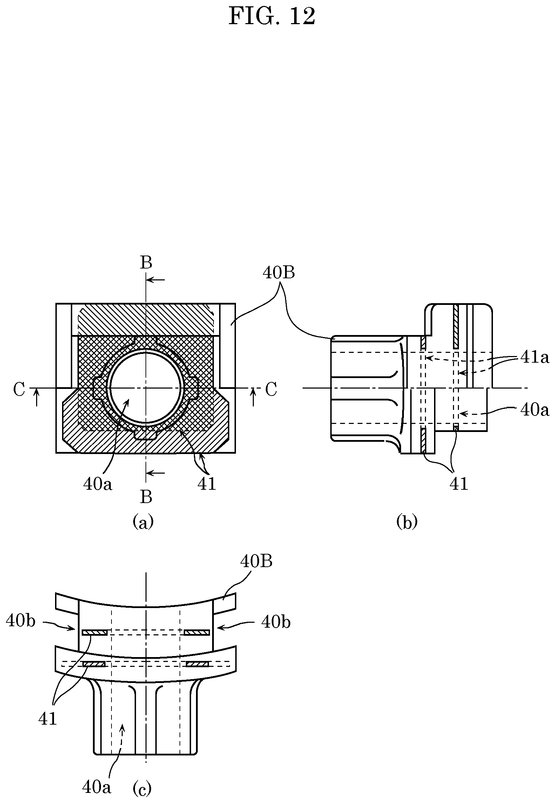

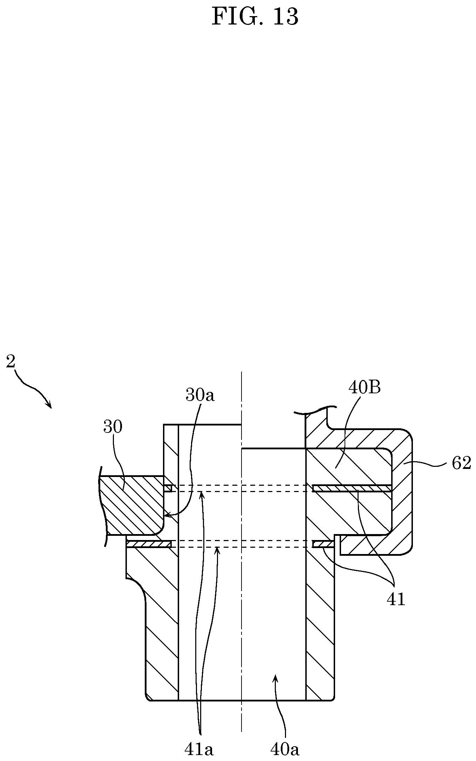

Next, molded motor 2 according to Embodiment 2 will be described with reference to FIGS. 12 and 13. FIG. 12 is a diagram showing the configuration of lead bush 40B used in molded motor 2 according to Embodiment 2, where (a) in FIG. 12 is a front view, (b) in FIG. 12 is a side view, and (c) in FIG. 12 is a top view. It should be noted that also in FIG. 12, metal member 41 is hatched for convenience. It should be noted that (b) in FIG. 12 shows a cross-section of metal member 41 taken along line B-B of (a) in FIG. 12, and (c) in FIG. 12 shows a cross-section of metal member 41 taken along line C-C of (b) in FIG. 12. In addition, FIG. 13 is an enlarged cross-sectional view of a main part of molded motor 2 according to Embodiment 2.

In molded motor 1 according to Embodiment 1 described above, metal member 41 of lead bush 40 is configured by one metal plate, but in molded motor 2 according to the present embodiment as shown in FIGS. 12 and 13, metal member 41 included in lead bush 40B is configured by a plurality of metal plates. It should be noted that in the description of Embodiment 2 and the subsequent embodiments, the same components as those in Embodiment 1 will be designated by the same reference numerals and the description of each component will be incorporated.

Specifically, in lead bush 40B of the present embodiment, metal member 41 is configured by a plurality of metal plates covering first opening 30a formed in mold resin 30. The plurality of metal plates configuring metal member 41 are arranged so as to overlap each other. More specifically, the plurality of metal plates are arranged such that second opening 41a included in each of the plurality of metal plates overlap each other. It should be noted that metal member 41 is configured by two metal plates in the present embodiment.

In addition, also in the present embodiment, each of second openings 41a formed in a plurality of metal plates configuring metal member 41 is smaller than first opening 30a formed in mold resin 30, and is larger than insertion through-hole 40a formed in lead bush 40.

With this, also in molded motor 2 in the present embodiment, when a layer short circuit is generated and the ignition occurs inside mold resin 30, it is possible to suppress fire from spouting from first opening 30a formed in mold resin 30 to the outside of mold resin 30.

In particular, metal member 41 is configured by a plurality of metal plates in the present embodiment. That is, first opening 30a formed in mold resin 30 is closed by the metal plate having a double structure. With this, it is possible to further suppress fire from spouting from first opening 30a formed in mold resin 30 to the outside of mold resin 30.

It should be noted that molded motor 2 in the present embodiment has the same configuration as molded motor 1 in Embodiment 1 described above except that metal member 41 is configured by a plurality of metal plates.

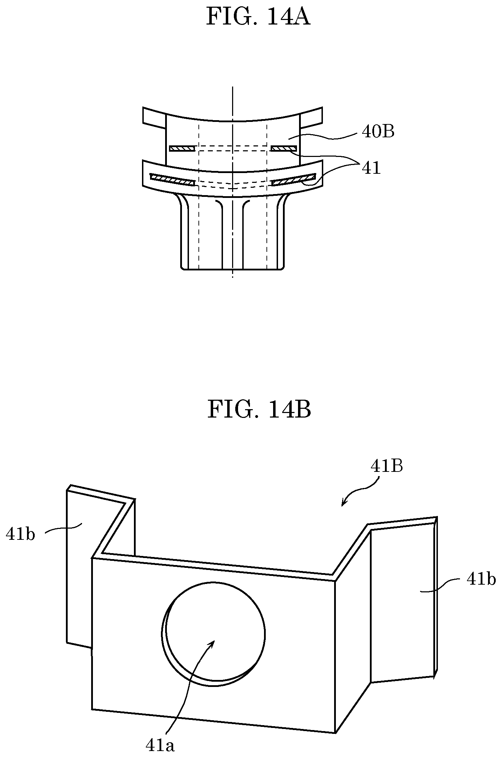

In addition, in the present embodiment, both of the two metal plates configuring metal member 41 are flat, but the present invention is not limited thereto. For example, one of the two metal plates configuring metal member 41 may be curved as in lead bush 40B shown in FIG. 14A. It should be noted that both of the two metal plates configuring metal member 41 may be curved.

In addition, as shown in FIG. 14B, also in the present embodiment, metal member 41B may have a positioning portion (hook portion) 41b for attaching metal member 41B to mold resin 30 similar to metal member 41A shown in FIG. 10. That is, metal member 41B may have a fall prevention structure.

### EMBODIMENT 3

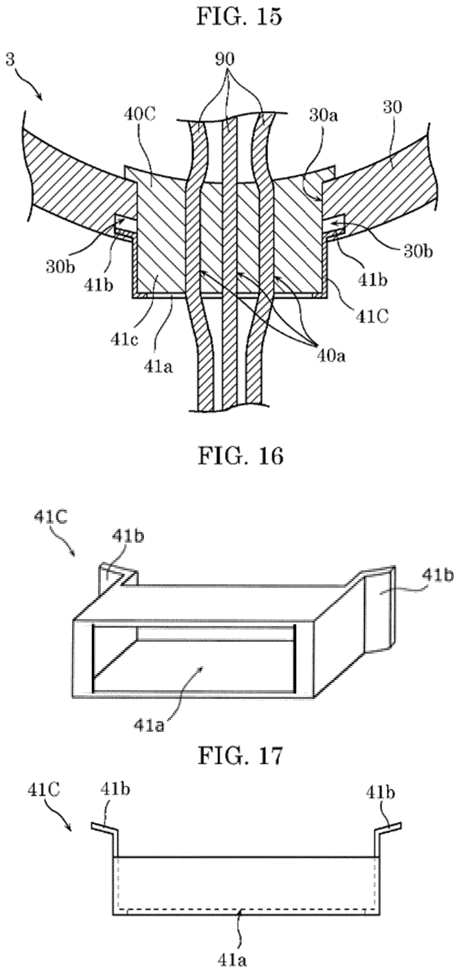

Next, molded motor 3 according to Embodiment 3 will be described with reference to FIGS. 15 to 17. FIG. 15 is a cross-sectional view showing the peripheral structure of mold resin 30 and lead bush 40C in molded motor 3 according to Embodiment 3. FIG. 16 is a perspective view of metal member 41C included in lead bush 40C used in molded motor 3, and FIG. 17 is a top view of metal member 41C.

As shown in FIG. 15, in molded motor 3 according to the present embodiment, lead bush 40C is a connector type, and includes protruding portion 41c that protrudes outward from the side wall portion of mold resin 30. Insertion through-hole 40a formed in lead bush 40C in the present embodiment is a small hole for preventing electric wire 90 from moving. In the present embodiment, since three electric wires 90 are inserted through lead bush 40C, three insertion through-holes 40a are provided. Electric wire 90 is inserted into each of insertion through-holes 40a. Electric wire 90 inserted into insertion through-hole 40a is held by lead bush 40C.

In addition, metal member 41C of lead bush 40C in the present embodiment is a metal cover that covers the outer surface of protruding portion 41c included in lead bush 40C. The metal cover is made of, for example, iron or the like.

Metal member 41C, which is a metal cover, includes second opening 41a. As shown in FIGS. 16 and 17, the shape of second opening 41a is rectangular in a front view seen in radial direction Y. Also in the present embodiment, second opening 41a is smaller than first opening 30a formed in mold resin 30 and larger than each insertion through-hole 40a included in lead bush 40C. Specifically, second opening 41a surrounds three insertion through-holes 40a included in lead bush 40C.

With this, even in molded motor 3 in the present embodiment, when a layer short circuit is generated and the ignition occurs inside mold resin 30, it is possible to suppress fire from spouting outside of mold resin 30 from first opening 30a formed in mold resin 30.

In addition, metal member 41C includes positioning portion 41b for attaching metal member 41C to mold resin 30 in lead bush 40C in the present embodiment. Specifically, metal member 41C includes a hook portion that is hooked on a part of mold resin 30 as positioning portion 41b. More specifically, as shown in FIGS. 16 and 17, metal member 41C has a bent portion formed by bending a part of the metal cover into a brim shape as positioning portion 41b (hook portion). As shown in FIG. 15, this positioning portion 41b (bent portion) is housed in recess 30b provided in the side wall portion of mold resin 30 and is locked to the inner surface of recess 30b.

In this way, by providing positioning portion 41b on metal member 41C, even if the resin portion of lead bush 40C is melted, it is possible to suppress metal member 41C from falling off from first opening 30a formed in mold resin 30. With this, positioning portion 41b included in metal member 41C functions as a fall prevention structure for metal member 41C, and thus it is possible to further suppress fire from spouting from first opening 30a.

It should be noted that molded motor 3 according to the present embodiment has the same configuration as the molded motors 1 and 2 according to Embodiments 1 and 2 described above except for the above-described features.

### EMBODIMENT 4

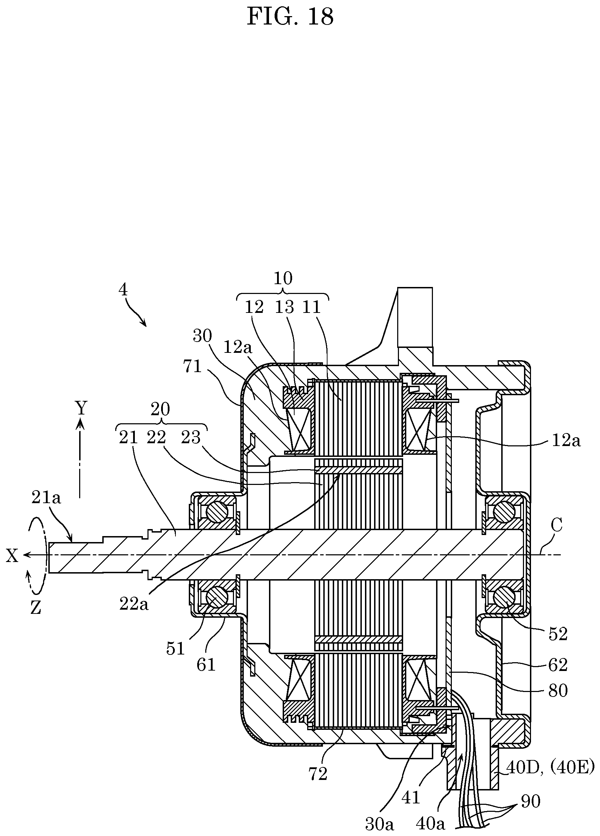

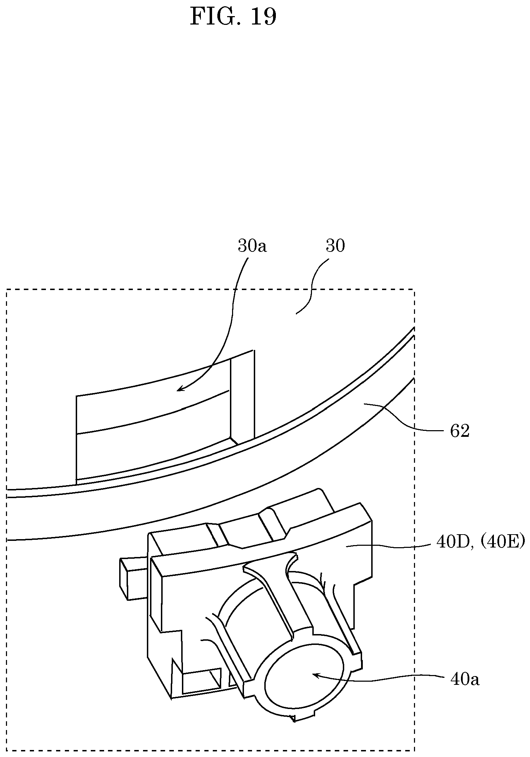

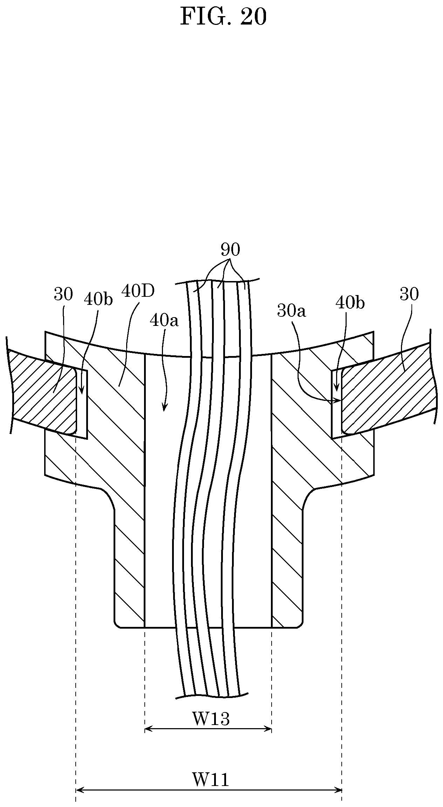

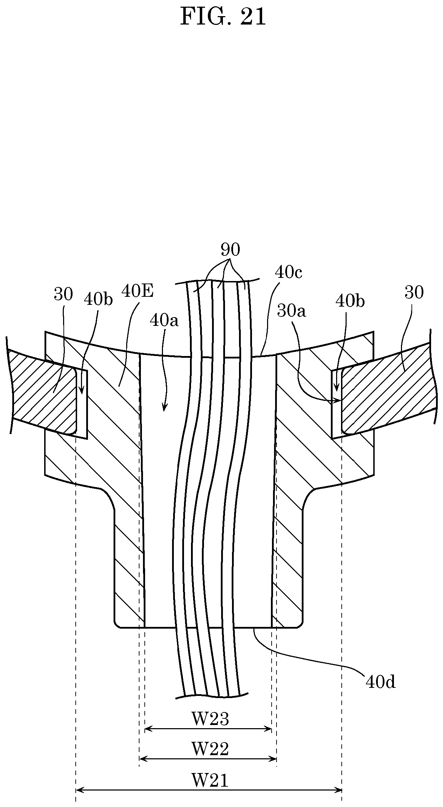

Next, molded motor 4 according to Embodiment 4 will be described with reference to FIGS. 18 to 21. FIG. 18 is a cross-sectional view of molded motor 4 according to Embodiment 4. FIG. 19 is a diagram showing molded motor 4 according to Embodiment 4 with lead bush 40D removed. FIGS. 20 and 21 are cross-sectional views showing the peripheral structure of mold resin 30 and lead bushes 40D and 40E in molded motor 4 according to Embodiment 4.

As shown in FIGS. 18 and 19, molded motor 4 according to the present embodiment includes stator 10, rotor 20 arranged to face stator 10, mold resin 30 covering stator 10, and lead bush 40D made of a ceramic.

Stator 10 includes stator core 11, coil 12, and insulator 13. Coil 12 is a winding coil wound around stator core 11 via insulator 13.

Rotor 20 includes rotary shaft 21. Rotor 20 includes rotor core 22 in which a plurality of permanent magnets 23 are embedded.

Mold resin 30 includes first opening 30a. Lead bush 40D is attached to this first opening 30a.

Lead bush 40D is a drawer portion for drawing out electric wire 90. Lead bush 40D is formed with an insertion through-hole 40a for drawing out electric wire 90. Insertion through-hole 40a is smaller than first opening 30a. That is, when insertion through-hole 40a formed in lead bush 40D is viewed from the front, that is, in radial direction Y intersecting with rotary shaft 21, the opening area of insertion through-hole 40a is smaller than the opening area of first opening 30a formed in mold resin 30.

Specifically, when insertion through-hole 40a formed in lead bush 40D is viewed from the front, the entire circumference of the opening edge of insertion through-hole 40a formed in lead bush 40D is located inside the entire circumference of the opening edge of first opening 30a formed in mold resin 30. As an example, when the opening width of first opening 30a is W11 and the opening width of insertion through-hole 40a is W13 as shown in FIG. 20, the relationship of W13 < W11 is satisfied.

In addition, more preferably, it is only needed that lead bush 40E includes inner opening 40c and outer opening 40d for drawing out electric wires 90 as shown in FIG. 21. Inner opening 40c is located inside molded motor 4 in lead bush 40E attached to mold resin 30. Outer opening 40d is located outside molded motor 4 in lead bush 40E attached to mold resin 30. In other words, insertion through-hole 40a formed in lead bush 40E includes inner opening 40c that is open to the inside of molded motor 4, that is, the rotary shaft 21 side, and outer opening 40d that is open to the outside of molded motor 4, that is, the opposite side to the side where rotary shaft 21 is located.

Inner opening 40c is smaller than first opening 30a and larger than outer opening 40d. That is, when insertion through-hole 40a formed in lead bush 40E is viewed from the front, that is, in radial direction Y intersecting with rotary shaft 21, the opening area of inner opening 40c included in insertion through-hole 40a formed inside mold resin 30 is smaller than the opening area of first opening 30a formed in mold resin 30 and larger than the opening area of outer opening 40d included in insertion through-hole 40a formed outside mold resin 30.

Specifically, when insertion through-hole 40a formed in lead bush 40E is viewed from the front, the entire circumference of the opening edge of inner opening 40c formed inside molded motor 4 in lead bush 40E is located inside the entire circumference of the opening edge of first opening 30a formed in mold resin 30, and is located outside the entire circumference of the opening edge of outer opening 40d formed outside molded motor 4 in lead bush 40E. As an example, when the opening width of first opening 30a is W21, the opening width of inner opening 40c included in insertion through-hole 40a is W22, and the opening width of outer opening 40d included in insertion through-hole 40a is W23, as shown in FIG. 21, the relationship of W23 < W22 < W21 is satisfied.

This configuration facilitates the work of passing electric wire 90 from the inside to the outside of lead bush 40E in molded motor 4.

By using ceramic lead bushes 40D and 40E having the configuration described above, even if coil 12 wound around stator 10 abnormally generates heat or the like and a layer short circuit occurs to cause ignition inside mold resin 30, lead bushes 40D and 40E made of a ceramic, which is a non-combustible material, will remain without burning. With this, since ceramic lead bushes 40D and 40E block fire from first opening 30a formed in mold resin 30 to which lead bushes 40D and 40E are attached to the outside of mold resin 30, it is possible to prevent fire from spouting from molded motor 4. As a result, it is possible to suppress the spread of the fire generated in molded motor 4.

### OTHER VARIATIONS

The molded motor according to the present disclosure has been described above based on the embodiments, but the present disclosure is not limited to the above embodiments.

For example, although second openings 41a included in metal members 41, 41A and 41B are circular holes in Embodiments 1 to 3 described above, the invention is not limited thereto, and the metal members may be in a cutout shape in which a part of the metal members is cut out. That is, second opening 41a is not limited to a closed hole, and may be a partially opened hole.

In addition, metal members 41 and 41A are embedded inside the main body of lead bush 40 in Embodiments 1 and 2 described above, but the present invention is not limited thereto. Specifically, the metal member may be fixed to lead bush 40 by forming a gap in a part of lead bush 40 and inserting the metal member (metal plate) into this gap.

In addition, the number of magnetic poles of rotor 20 is 10 (that is, the number of permanent magnets 23 is 10) in each of Embodiments 1 to 4 described above, but the number is not limited thereto. Any number of magnetic poles of rotor 20 can be applied.

Forms obtained by applying various variations that are conceived by those skilled in the art to the embodiments described above, and forms achieved by arbitrarily combining the components and functions of the embodiments described above. The scope of the invention is defined by the appended claims.

### INDUSTRIAL APPLICABILITY

The molded motor according to the present disclosure can be used as a motor in various fields including a fan motor used in an air conditioner and the like.

### REFERENCE MARKS IN THE DRAWINGS

- 1, 2, 3, 4: molded motor
- 10: stator
- 11: stator core
- 11a: york
- 11b: teeth
- 11b1: extending portion
- 12: coil
- 12a: coil end
- 13: insulator
- 14: slot
- 20: rotor
- 21: rotary shaft
- 21a: output shaft
- 22: rotor core
- 22a: magnet insertion hole
- 23: permanent magnet
- 30: mold resin
- 30a: first opening
- 30b: recess
- 40, 40A, 40B, 40C, 40D, 40E: lead bush
- 40a: insertion through-hole
- 40b: recess
- 40c: inner opening
- 40d: outer opening
- 41, 41A, 41B, 41C: metal member
- 41a: second opening
- 41b: positioning portion
- 41c: protruding portion
- 51: first bearing
- 52: second bearing
- 61: first bracket
- 62: second bracket
- 71: first metal cover
- 72: second metal cover
- 80: circuit board
- 90: electric wire

## Claims

1. A molded motor (1, 2, 3), comprising:
a stator (10) that includes a stator core (11) and a coil (12) wound around the stator core (11) via an insulator (13);
a rotor (20) that is arranged to face the stator (10) and includes a rotor core (22) and a rotary shaft (21);
a mold resin (30) that includes a first opening (30a) and covers the stator (10); and
a lead bush (40, 40A, 40B, 40C, 40D, 40E) that is attached to the first opening (30a) and includes an insertion through-hole (40a) for drawing out an electric wire (90), **characterized in that**
the lead bush (40, 40A, 40B, 40C, 40D, 40E) includes a metal member (41, 41A, 41B, 41C) including a second opening (41a) for drawing out the electric wire (90), the second opening (41a) being smaller than the first opening (30a) and larger than the insertion through-hole (40a), wherein the insertion through-hole (40a) extends through the second opening (41a); wherein
an outer shape of the metal member (41, 41A, 41B, 41C) covers the first opening (30a).

2. The molded motor (1, 2) according to claim 1, wherein
the metal member (41, 41A, 41B,) is embedded in the lead bush (40, 40A, 40B, 40D, 40E).

3. The molded motor (1, 2, 3) according to claim 2, wherein
the metal member (41, 41A, 41B, 41C) is arranged so that an outer shape of the metal member (41, 41A, 41B, 41C) covers the first opening (30a) in a direction intersecting a longitudinal direction of the rotary shaft (21).

4. The molded motor (2) according to claim 3, wherein
the metal member (41) includes a plurality of metal plates that cover the first opening (30a), and
the plurality of metal plates are arranged so that the second opening (41a) included in each of the plurality of metal plates overlap each other.

5. The molded motor (3) according to claim 1, wherein
the lead bush (40C) includes a protruding portion (41c) that includes the insertion through-hole (41a) and protrudes outward, and
the metal member (41C) is a metal cover that covers an outer surface of the protruding portion (41c).

6. The molded motor (1, 2, 3) according to any one of claims 1 to 5, wherein
the metal member (41A, 41B, 41C) includes a positioning portion (41b) for attaching the metal member (41A, 41B, 41C) to the mold resin (30).

7. The molded motor (1, 2, 3, 4) according to any one of claims 1 to 6, wherein
a wire diameter of the coil (12) is φ0.3 mm or more.

8. The molded motor (1, 2, 3, 4) according to any one of claims 1 to 8, wherein
the coil (12) includes coil ends (12a) that protrude from the stator core (11) to both sides of the stator core (11) along a longitudinal direction of the rotary shaft (21), and
each of the coil ends (12a) is covered with a metal cover (71, 72) provided along a circumferential direction of the mold resin (30).

## Patentansprüche

1. Ein gegossener Motor (1, 2, 3), umfassend:
einen Stator (10), der einen Statorkern (11) und eine Spule (12) enthält, die über einen Isolator (13) um den Statorkern (11) gewickelt ist;
einen Rotor (20), der so angeordnet ist, dass er dem Stator (10) gegenüberliegt, und einen Rotorkern (22) und eine Drehwelle (21) umfasst;
ein Formharz (30), das eine erste Öffnung (30a) umfasst und den Stator (10) bedeckt; und
eine Führungsbuchse (40, 40A, 40B, 40C, 40D, 40E), die an der ersten Öffnung (30a) befestigt ist und ein Einsteckdurchgangsloch (40a) zum Herausziehen eines elektrischen Drahtes (90) umfasst, **dadurch gekennzeichnet, dass**
die Führungsbuchse (40, 40A, 40B, 40C, 40D, 40E) ein Metallteil (41, 41A, 41B, 41C) mit einer zweiten Öffnung (41a) zum Herausziehen des elektrischen Drahtes (90) umfasst, wobei die zweite Öffnung (41a) kleiner als die erste Öffnung (30a) und größer als das Einsteckdurchgangsloch (40a) ist, wobei sich das Einsteckdurchgangsloch (40a) durch die zweite Öffnung (41a) erstreckt; wobei
eine Außenform des Metallteils (41, 41A, 41B, 41C) die erste Öffnung (30a) abdeckt.

2. Der gegossene Motor (1, 2) gemäß Anspruch 1, wobei
das Metallteil (41, 41A, 41B) in die Führungsbuchse (40, 40A, 40B, 40D, 40E) eingebettet ist.

3. Der gegossene Motor (1, 2, 3) gemäß Anspruch 2, wobei
das Metallteil (41, 41A, 41B, 41C) so angeordnet ist, dass eine Außenform des Metallteils (41, 41A, 41B, 41C) die erste Öffnung (30a) in einer Richtung abdeckt, die eine Längsrichtung der Drehwelle (21) schneidet.

4. Der gegossene Motor (2) gemäß Anspruch 3, wobei
das Metallteil (41) mehrere Metallplatten umfasst, die die erste Öffnung (30a) abdecken, und
die mehreren Metallplatten so angeordnet sind, dass die zweite Öffnung (41a), die in jeder der mehreren Metallplatten enthalten ist, sich gegenseitig überlappen.

5. Der gegossene Motor (3) nach Anspruch 1, wobei
die Führungsbuchse (40C) einen vorstehenden Abschnitt (41c) aufweist, der das Einsteckdurchgangsloch (41a) aufweist und nach außen vorsteht, und
das Metallteil (41C) eine Metallabdeckung ist, die eine Außenfläche des vorstehenden Abschnitts (41c) abdeckt.

6. Der gegossene Motor (1, 2, 3) nach einem der Ansprüche 1 bis 5, wobei
das Metallteil (41A, 41B, 41C) einen Positionierungsabschnitt (41b) zum Befestigen des Metallteils (41A, 41B, 41C) an dem Formharz (30) umfasst.

7. Der gegossene Motor (1, 2, 3, 4) gemäß einem der Ansprüche 1 bis 6, wobei
der Drahtdurchmesser der Spule (12) φ0,3 mm oder mehr beträgt.

8. Der gegossene Motor (1, 2, 3, 4) gemäß einem der Ansprüche 1 bis 8, wobei
die Spule (12) Spulenenden (12a) aufweist, die entlang einer Längsrichtung der Drehwelle (21) aus dem Statorkern (11) zu beiden Seiten des Statorkerns (11) herausragen, und
jedes der Spulenenden (12a) mit einer Metallabdeckung (71, 72) bedeckt ist, die entlang einer Umfangsrichtung des Formharzes (30) vorgesehen ist.

## Revendications

1. Moteur moulé (1, 2, 3), comprenant :
un stator (10) qui comprend un noyau de stator (11) et une bobine (12) enroulée autour du noyau de stator (11), un isolant (13) étant intercalé entre eux ;
un rotor (20) qui est agencé de manière à faire face au stator (10) et comprend un noyau de rotor (22) et un arbre rotatif (21) ;
une résine de moulage (30) qui comprend une première ouverture (30a) et recouvre le stator (10) ; et
une douille de guidage (40, 40A, 40B, 40C, 40D, 40E) qui est fixée à la première ouverture (30a) et comprend un trou traversant d'insertion (40a) permettant de faire passer un fil électrique (90),
**caractérisé en ce que** la douille de guidage (40, 40A, 40B, 40C, 40D, 40E) comprend un élément métallique (41, 41A, 41B, 41C) comprenant une deuxième ouverture (41a) permettant de faire passer le fil électrique (90), la deuxième ouverture (41a) étant plus petite que la première ouverture (30a) et plus grande que le trou traversant d'insertion (40a), le trou traversant d'insertion (40a) s'étendant à travers la deuxième ouverture (41a) ; étant entendu que
une forme extérieure de l'élément métallique (41, 41A, 41B, 41C) recouvre la première ouverture (30a).

2. Moteur moulé (1, 2) selon la revendication 1, dans lequel
l'élément métallique (41, 41A, 41B) est intégré dans la douille de guidage (40, 40A, 40B, 40D, 40E).

3. Moteur moulé (1, 2, 3) selon la revendication 2, dans lequel
l'élément métallique (41, 41A, 41B, 41C) est agencé de manière à ce qu'une forme extérieure de l'élément métallique (41, 41A, 41B, 41C) recouvre la première ouverture (30a) dans une direction coupant une direction longitudinale de l'arbre rotatif (21).

4. Moteur moulé (2) selon la revendication 3, dans lequel
l'élément métallique (41) comprend une pluralité de plaques métalliques qui recouvrent la première ouverture (30a), et
la pluralité de plaques métalliques sont agencées de manière à ce que la deuxième ouverture (41a) comprise dans chacune des plaques métalliques en chevauche une autre.

5. Moteur moulé (3) selon la revendication 1, dans lequel
la douille de guidage (40C) comprend une portion saillante (41c) qui comprend le trou traversant d'insertion (41a) et fait saillie vers l'extérieur, et
l'élément métallique (41C) est un cache métallique qui recouvre une surface extérieure de la portion saillante (41c).

6. Moteur moulé (1, 2, 3) selon l'une quelconque des revendications 1 à 5, dans lequel
l'élément métallique (41A, 41B, 41C) comprend une portion de positionnement (41b) pour fixer l'élément métallique (41A, 41B, 41C) à la résine de moulage (30).

7. Moteur moulé (1, 2, 3, 4) selon l'une quelconque des revendications 1 à 6, dans lequel
le diamètre du fil de la bobine (12) est supérieur ou égal à φ0,3 mm.

8. Moteur moulé (1, 2, 3, 4) selon l'une quelconque des revendications 1 à 8, dans lequel
la bobine (12) comprend des extrémités de bobine (12a) qui font saillie à partir du noyau de stator (11) vers les deux côtés du noyau de stator (11) dans la direction longitudinale de l'arbre rotatif (21), et
chacune des extrémités de bobine (12a) est recouverte d'un cache métallique (71, 72) prévu dans la direction circonférentielle de la résine de moulage (30).
